# EUROPEAN PATENT SPECIFICATION

(11) **EP 0 900 722 B1**
(45) Date of publication and mention of the grant of the patent: **22.06.2005**
(21) Application number: 98114399.3
(22) Date of filing: 07.08.1998
(51) Int. Cl.: B62K 21/08

(54) **Steering damper for a motorcycle**
Lenkungsdämpfer für ein Motorrad
Amortisseur de direction pour motocyclette

(30) Priority: 07.08.1997 IT MI970600 U
(43) Date of publication of application: 10.03.1999
(73) Proprietor: M.V. AGUSTA S.p.A, 21100 Varese (IT)
(72) Inventor: Tamburini, Massimo, 47895 Domagnano (SM)
(74) Representative: Giambrocono, Alfonso, Dr. Ing.

(56) References cited:
- WO-A-86/03267
- DE-A- 2 710 651
- US-A- 4 558 878

## Description

This innovation relates to a steering damper arrangement for a motorcycle or similar, as described in the preamble of the main claim.

As is well-known, the steering assembly of motorcycles, especially racing motorcycles, is frequently combined with a linear damper in order to dampen the shaking of the steering on account of roughness encountered on the terrain.

One of the known solutions is characterized in that a support for the steering damper is hinge-mounted to any point of the steering assembly, said damper being attached at one of its ends to a support associated with the frame, around which it is free to rotate. According to this solution, the damper is disposed with its longitudinal axis substantially orthogonal to the longitudinal plane of symmetry of the vehicle and transversal thereto.

This known solution, though easily implemented and enabling excellent results to be obtained while the vehicle is being used, has revealed the problem of a lack of complete symmetricality of response at opposite steering angles. In other words, despite this known damper having a substantial symmetricality of response, this symmetricality (though, as already said, considerable) has been found to be insufficient for particular usages of the motorcycle (for instance, during severe sporting usage). This is due to the fact that perfect and constant orthogonality is not maintained during turning between the axis of the damper (which rotates, though only slightly, about the support associated with the frame) and the longitudinal plane of symmetry of the motor vehicle.

Moreover, the angular excursions, though only slight, of the known steering damper during turning restrict, in particular, the stylistic definition of a number of parts of the motorcycle in the area in which this damper is applied, such as the fuel tank, for example.

DE-2710651 discloses a motorcycle having a steering damper mounted on the vehicle frame at right angle to the longitudinal median plane of the vehicle. The piston rod of the steering damper is rigidly connected with the vehicle frame and the damper cylinder (on steering) is displaced along the static piston rod by an actuating mechanism connected with the fork bridge. The actuating mechanism comprises: a) a tubular guide rigidly connected with the fork bridge and extending in the longitudinal median plane of the fork bridge; and b) a piston-like member slidingly received in the tubular guide and pivotally connected with the damper cylinder. The known device involves sliding friction and hence wear phenomena (occurring within short time). It is subjected to flexural stresses, axially cumbersome and subjected to jamming.

US 4.558.878 discloses an all terrain cycle having a steering stabilizer (damper 25) whose piston rod is pivotally connected to the front-wheel fork and whose cylinder is pivotally connected to the motorcycle frame. The stabilizer acts as shock absorber and is located at one side of the cycle and its axis forms with cycle axis V an angle lower than 90°. In view of the dissimetry the known design is not applicable to two-wheels motorcycle moving at higher speed than all terrain vehicle. The object of this innovation is to offer a better steering damper arrangement than the known steering damper arrangements.

In particular, the object of the innovation is to offer a steering damper arrangement of the type referred to which, irrespective of the conditions and the usage made of the motorcycle, enables a constantly symmetrical response with respect to the opposite steering angles.

Another object is to offer a steering damper arrangement of the type referred to which is simple and easy to use, and with a response that may be regulated by the rider, without this entailing any risk to riding of the motorcycle.

Yet another object is to offer a steering damper arrangement of the type referred to which permits the aesthetic definition of some parts of the motorcycle, located in the same area as the steering damper and of particular importance to the general appearance.

These and other objects, which will be apparent to those skilled in the art, are achieved by a steering damper arrangement according to the accompanying claims 1 and 8.

For a clearer understanding of the present innovation, the following drawings have been provided by way of a non-exhaustive, purely illustrative example, wherein:
figure 1 represents a view from above of the device according to the innovation fitted to the front part of the motorcycle, shown with some parts missing for clarity's sake;
figure 2 is a lateral, partially sectioned view of the device according to the innovation;
figure 3 is a view from the rear, with a number of parts in section, of the device according to the innovation;
figure 4 represents an enlarged view of the part denoted K in figure 3;
figure 5 is a view from above of a variant of the innovation applied to the front part of the motorcycle, shown with some parts missing for clarity's sake.

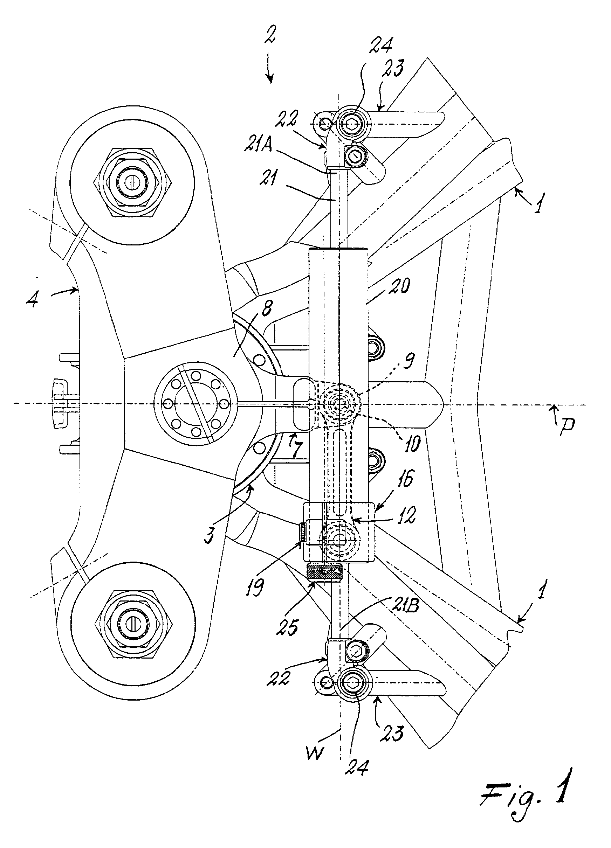

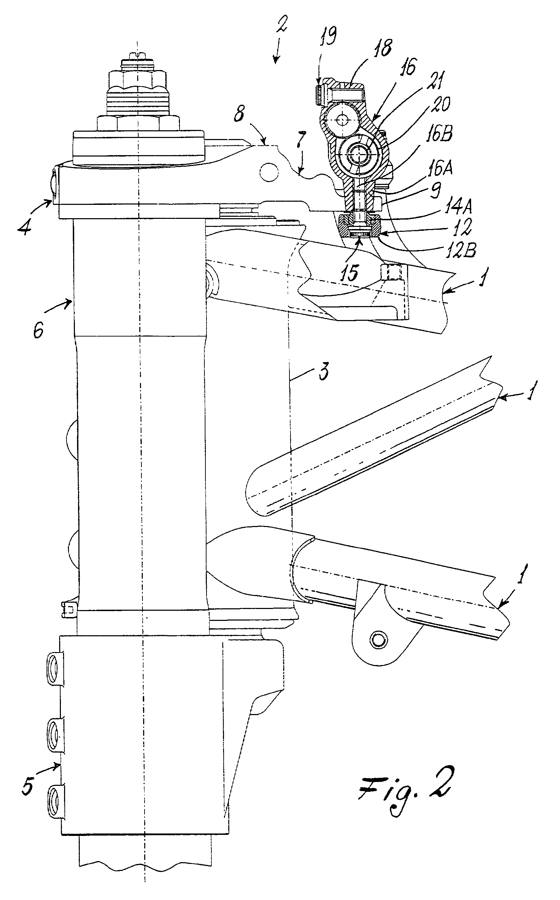

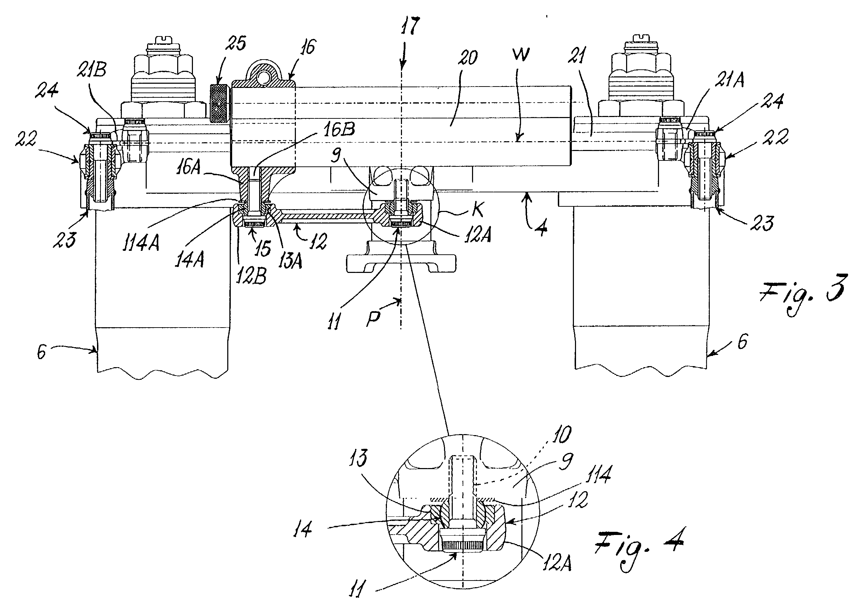

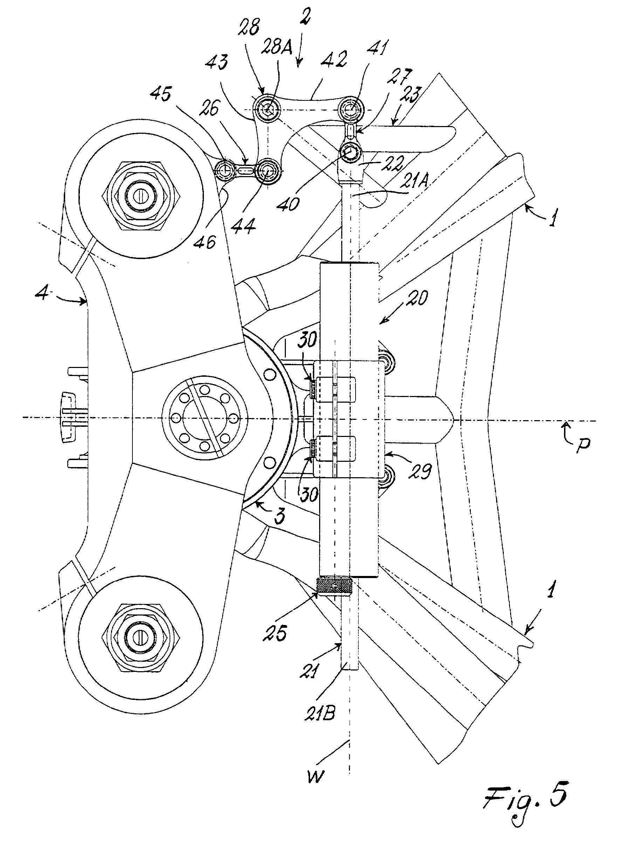

With reference to the figures 1, 2, 3 and 4 mentioned, a motorcycle comprises a frame 1 supporting at its front end 2 a steering assembly comprising a steering column 3 which accommodates a known type steering pin (not depicted) attached to known type handlebars (again not depicted). The above-mentioned pin is also associated with a steering head 4 and a steering base 5, to which are attached known type damper members or forks 6 attached to the front wheel of the motorcycle (not depicted).

The steering head 4 has a projection 7 in its middle portion 8 in the vicinity of the steering column 3. At a free end 9 of this projection 7 is a hole 10, wherein a screw 11 (or similar fastening member) is inserted to fasten to this projection (and accordingly also to the steering head 4) a connecting link 12, in a first end 12A of which a seat 13 has been made for a ball joint 14 (or a rigid radial bearing or other similar member having the function of a "hinge") engaged on the screw 11. The joint 14 acts on a ring-shaped element 114, located between it and the end 9 of the projection 7.

The connecting link 12 at its second end 12B has another ball joint 14A (or a rigid radial bearing or other similar member having the function of a "hinge") similar to the one denoted with the numeral 14, engaged on a screw 15 (or similar fastening member) which links it to a support 16 of a steering damper 17. This joint 14A is located in a seat 13A provided in the end 12B of the connecting link 12 and cooperates with a ring-shaped element 114A located between it and an eccentric end part 16A of the above-mentioned support 16, wherein a seat 16B has been made for the screw 15.

The support 16 has an upper portion 18 at the end opposite the part 16A, formed as a clamp with a screw 19 (or similar closing member) to tighten it. It is suitable for being locked on a known type cylinder or sheath 20 of the damper 17. The latter is a known type linear damper comprising a piston 21 sliding in the cylinder 20. The piston 21 has free, opposite ends 21A and 21B protruding from the cylinder 20 and engaged in terminal elements 22 fitted on said ends and fixed to the latter in any known way. The terminal elements 22 are in turn fastened to supports 23 connected to the frame 1, this fastening accordingly permitting fastening of the piston 21 to said frame. The said fastening is by means of a screw 24 (or similar fixing member) in a seat 24A provided in the respective support 23. Accordingly, the steering damper 17 is disposed with its longitudinal axis W orthogonal to the motorcycle's longitudinal plane of symmetry P and transversally with respect to the latter, in position between the front end of the motorcycle 2 and the rider, maintaining this spatial disposition constantly throughout the use of the vehicle.

The damper may include, as in the present case, a known type adjustment member permitting adjustment in a known way of its response simply by adjusting a knob 25 provided.

Unlike the known solution wherein a steering damper is arranged between the steering head 4 and the rider, but having the possibility of rotating about a hinge by which it is fastened to the frame, this innovation enables the orthogonality between the axis W of the damper 17 and the plane P of the motorcycle to be maintained unaltered, thanks to the attachment of the piston to the frame 1 of the vehicle, without affecting the vehicle's drivability owing to the fact that rotation of the handlebars and therefore of the steering head 4 (and of the other steering members directly or indirectly connected thereto) is permitted by the presence of the connecting rod or connecting link 12 coupled with the cylinder 20 of the damper and with the head 4 itself through ball joints 14 and 14A, or similar pivot members such as the rigid radial bearings. By maintaining the above-mentioned orthogonality through the entire sweep of the steering, the damper 17 offers a completely symmetrical response at opposite steering angles.

In addition, thanks to the use of the connecting link 12 disposed as illustrated in figure 3 (that is to say, disposed from the median plane P of the motorcycle, in which the axis of the joint 14 lies, to the end of the cylinder 20, also having extremely reduced thickness with respect to the already minimal thickness of the damper 17), the whole assembly is made compact in terms of depth, so that supports 23 of very shallow depth can be used.

A variant of the innovation is illustrated in figure 5. In this figure, parts corresponding to those already described in figures 1 to 4 are indicated with the same reference numerals. In the figure, instead of the piston rod 21 as in the preceding figures, it is the cylinder 20 that is fixed to the frame, the piston rod moving relatively thereto, suitably actuated during turning by a pair of connecting links 26 and 27 and by a rocker arm 28 hinge-mounted at 28A to a support 23 of the frame 1. In greater detail, attached to the end 21A of the piston rod 21 is the terminal element 22, in turn hinge-mounted at 40 to one end of the connecting link 27. The other end of the latter-named is hinge-mounted at 41 to one arm 42 of the rocker arm 28, the other arm 43 of which is hinge-mounted at 44 to one end of the connecting link 26. The latter-named's other end is hinge-mounted at 45 to a projection 46 made in the steering head 4.

The cylinder 20 is connected to the frame through a clamp-like support 29 connected to the column 3 of the frame, containing the above-mentioned cylinder and with screws 30 (or similar closing members) to tighten it. The cylinder, however, may also be attached to the frame in any other known way.

The advantages referred to earlier are obtained with this innovation. Further, in view of the fact that the damper 17 does not make even the slightest angular excursion (as in the known solution), a fuel tank with special and aesthetically more pleasing shapes may be constructed, for example a fuel tank more pronounced in the forward direction.

Various embodiments of the innovation have been described and mentioned. Still others may be made in the light of the preceding description (such as one in which the damper is connected to the steering base 5 or to one of the damping members of the vehicle) and these should be seen to come within the scope of the present document.

## Claims

1. Steering damper arrangement for a motorcycle, the latter comprising a frame (1) supporting at its front end (2) a steering assembly comprising a steering head (4) and a steering base (5), to which are fitted known type damper members (6) which cooperate with a front wheel of the motorcycle, the latter having a longitudinal plane of symmetry (P), the steering damper arrangement (17) comprising, a steering damper having a cylinder (20) with respect to which a piston (21) moves in accordance with the steering angle imposed by the rider on the steering assembly, said steering damper (17) having a longitudinal axis (W), being, in use, constantly orthogonal to the longitudinal plane of symmetry (P) of the motorcycle and transverse with respect to the latter, and an actuating mechanism, the steering damper being actuatable by the steering assembly through said actuating mechanism, **characterized in that** the damper actuating mechanism comprises a connecting rod (12) adapted to connect the damper cylinder (20) to the steering head (4) of the steering assembly, through hinge-mountings (11, 15) at the ends of the connecting rod.

2. Steering damper arrangement according to claim 1, **characterized in that** the piston (21) comprises opposite ends (21A, 21B) both protruding from opposite ends of the cylinder (20), the said ends (21A, 21B) being attachable to supports (23) of the frame (1).

3. Steering damper arrangement according to claim 2, **characterized in that** the hinge-mounting (15) on the cylinder (20) is on a support member (16) of the cylinder.

4. Steering damper arrangement according to the preceeding claims, wherein said connecting rod (12) is hinge mountable (11) on the steering head (4) at a median projection (7) of the steering head (4).

5. Steering damper arrangement according to any of the preceeding claims, wherein the hinge-mountings (11, 15) include ball joints (14, 14A).

6. Steering damper arrangement according to claim 1, **characterized in that** it is mountable between the steering assembly and the rider of the motorcycle.

7. Steering damper according to claim 1, **characterized in that** it is mountable in front of the steering assembly.

8. Steering damper arrangement for a motorcycle, the latter comprising a frame (1) supporting at its front end (2) a steering assembly comprising a steering head (4) and a steering base (5), to which are fitted known type damper members (6) which cooperate with a front wheel of the vehicle, the latter having a longitudinal plane of symmetry (P), the steering damper arrangement (17) comprising, a steering damper having a cylinder (20) with respect to which a piston (21) moves in accordance with the steering angle imposed by the rider on the steering assembly, said steering damper (17) having a longitudinal axis (W), being, in use, constantly orthogonal to the longitudinal plane of symmetry (P) of the motorcycle and transverse with respect to the latter, and an actuating mechanism, the steering damper being actuatable by the steering assembly through an actuating mechanism, **characterized in that** the damper actuating mechanism comprises a linkage (26, 27, 28) supportable by the motorcycle frame (1), and adapted to connect the steering assembly with the damper piston (21) to move the latter within the damper cylinder which is rigidly connectable with the motorcycle frame (1).

9. Steering damper arrangement according to claim 8, **characterized in that** the piston (21) comprises ends (21A, 21B) protruding from opposite ends of the cylinder (20), on at least one of which ends (21A) said linkage (26, 27, 28) is located, said linkage comprising a first connecting rod (27) which in turn is hinge-mounted (at 41) to one arm (42) of a rocker arm (28), the other arm (43) of the latter being hinge-mounted (at 44) on a second connecting rod (26) hinge-mountable on the steering assembly.

10. Steering damper according to claim 8, **characterized in that** it is mountable between the steering assembly and the rider of the motorcycle.

11. Steering damper according to claim 8, **characterized in that** it is mountable in front of the steering assembly.

## Patentansprüche

1. Lenkungsdämpferaufbau für ein Motorrad, wobei das Letztere einen Rahmen (1) hat, der an seinem vorderen Ende (2) einen Lenkungsaufbau trägt, welcher einen Lenkerkopf (4) und eine Lenkerbasis (5) umfasst, an der in bekannter Weise Dämpferglieder (6) angebracht sind, die mit einem Vorderrad des Motorrads zusammenwirken, wobei das Letztere eine Längssymmetrieebene (P) hat., wobei der Lenkungsdämpferaufbau (17) einen Lenkungsdämpfer mit einem Zylinder (20), in Bezug auf den ein Kolben sich gemäß dem von dem Fahrer an dem Lenkungsaufbau eingestellten Lenkungswinkel bewegt, wobei der Lenkungsdämpfer (17) eine Längsachse (W) hat, die im Betrieb permanent orthogonal zu der Längssymmetrieebene (P) des Motorrads und quer in Bezug auf die Letztere steht, und einen Betätigungsmechanismus aufweist, wobei der Lenkungsdämpfer durch den Lenkungsaufbau über den Betätigungsmechanismus zu betätigen ist, **dadurch gekennzeichnet, dass** der Dämpfungsbetätigungsmechanismus eine Verbindungsstange (12) aufweist, die dazu angepasst ist, den Dämpfungszylinder (20) mit dem Lenkungskopf (4) des Lenkungsaufbaus durch Gelenkverbindungen (11, 15) an den Enden der Verbindungsstange zu verbinden.

2. Lenkungsdämpferaufbau nach Anspruch 1, **dadurch gekennzeichnet, dass** der Kolben (21) gegenüberliegende Enden (21A, 21B) aufweist, die aus gegenüberliegenden Enden des Zylinders (20) vorstehen, wobei die Enden (21A, 21B) an Trägern (23) des Rahmens (1) zu befestigen sind.

3. Lenkungsdämpferaufbau nach Anspruch 2, **dadurch gekennzeichnet, dass** die Gelenkverbindung (15) an dem Zylinder (20) sich an einem Trägerteil (16) des Zylinders befindet.

4. Lenkungsdämpferaufbau nach einem der vorhergehenden Ansprüche, wobei die Verbindungsstange (12) an dem Lenkungskopf (4) an einem mittleren Vorsprung (7) des Lenkungskopfes gelenkig anbringbar ist.

5. Lenkungsdämpferaufbau nach einem der vorhergehenden Ansprüche, wobei die Gelenkverbindungen (11, 15) Kugelgelenke (14, 14A) umfassen.

6. Lenkungsdämpferaufbau nach Anspruch 1, **dadurch gekennzeichnet, dass** er zwischen dem Lenkungsaufbau und dem Fahrer des Motorrads anbringbar ist.

7. Lenkungsdämpfer nach Anspruch 1, **dadurch gekennzeichnet, dass** er vor dem Lenkungsaufbau anbringbar ist.

8. Lenkungsdämpferaufbau für ein Motorrad, wobei das Letztere einen Rahmen (1) aufweist, der an seinem vorderen Ende (2) einen Lenkungsaufbau trägt, welcher einen Lenkungskopf (4) und eine Lenkungsbasis (5) umfasst, an der in bekannter Weise Dämpferglieder (6) angebracht sind, die mit einem Vorderrad des Fahrzeugs zusammenwirken, wobei das Letztere eine Längssymmetrieebene (P) hat, wobei der Lenküngsdämpferaufbau (17) mit einem Zylinder (20) aufweist, in Bezug auf den ein Kolben sich gemäß dem von dem Fahrer an dem Lenkungsaufbau eingestellten Lenkungswinkel bewegt, wobei der Lenkungsdämpfer (17) eine Längsachse (W) hat, die im Betrieb permanent orthogonal zu der Längssymmetrieebene (P) des Motorrads und quer in Bezug auf die Letztere liegt, und einen Betätigungsmechanismus aufweist, wobei der Lenkungsdämpfer durch den Lenkungsaufbau über einen Betätigungsmechanismus zu betätigen ist, **dadurch gekennzeichnet, dass** der Lenkungsbetätigungsmechanismus ein Gestänge (26, 27, 28) aufweist, das von dem Motorradrahmen (1) getragen werden kann und dazu angepasst ist, den Lenkungsaufbau mit dem Dämpferkolben (21) zu verbinden, um den Letzteren innerhalb des Dämpferzylinders zu bewegen, der fest mit dem Motorradrahmen (1) verbindbar ist.

9. Lenkungsdämpferaufbau nach Anspruch 8, **dadurch gekennzeichnet, dass** der Kolben (21) Enden (21A, 21B) aufweist, die von gegenüberliegenden Enden des Zylinders hervorragen, wobei an wenigstens einem dieser Enden (21a) das Gestänge (26, 27, 28) angeordnet ist, wobei das Gestänge eine erste Verbindungsstange (27) aufweist, die wiederum gelenkig (41) mit einem Arm (42) eines Kipphebels (28) verbunden ist, wobei der andere Arm (43) des Letzteren gelenkig (44) an einer zweiten Verbindungsstange (26) verbunden ist, die gelenkig an dem Lenkungsaufbau anbringbar ist.

10. Lenkungsdämpferaufbau nach Anspruch 8, **dadurch gekennzeichnet, dass** er zwischen dem Lenkungsaufbau und einem Fahrer des Motorrades anbringbar ist.

11. Lenkungsdämpferaufbau nach Anspruch 8, **dadurch gekennzeichnet, dass** er vor dem Lenkungsaufbau anbringbar ist.

## Revendications

1. Dispositif d'amortisseur de direction destiné à une motocyclette, cette dernière comprenant un cadre (1) supportant au niveau de son extrémité avant (2) un ensemble de direction comprenant une tête de direction (4) et une base de direction (5), sur lequel sont montés des éléments d'amortisseur (6) de type connu, qui coopèrent avec une roue avant de la motocyclette, cette dernière ayant un plan de symétrie (P) longitudinal, le dispositif d'amortisseur de direction (17) comprenant un amortisseur de direction doté d'un cylindre (20) par rapport auquel un piston (21) se déplace selon l'angle de direction imposé par le conducteur sur l'ensemble de direction, ledit amortisseur de direction (17) ayant un axe longitudinal (W) qui est, à l'usage, constamment orthogonal au plan de symétrie longitudinal (P) de la motocyclette et transversal par rapport à ce dernier, et à un mécanisme d'actionnement, l'amortisseur de direction pouvant être actionné par l'ensemble de direction par l'intermédiaire dudit mécanisme d'actionnement, **caractérisé en ce que** le mécanisme d'actionnement d'amortisseur comprend une tige de raccordement (12) adaptée pour raccorder le cylindre (20) d'amortisseur à la tête de direction (4) de l'ensemble de direction, par le biais de montages articulés (11, 15) situés au niveau des extrémités de la tige de raccordement.

2. Dispositif d'amortisseur de direction selon la revendication 1, **caractérisé en ce que** le piston (21) comprend des extrémités opposées (21A, 21B) faisant toutes deux saillie à partir des extrémités opposées du cylindre (20), lesdites extrémités (21A, 21B) pouvant être fixées aux supports (23) du cadre (1).

3. Dispositif d'amortisseur de direction selon la revendication 2, **caractérisé en ce que** le montage articulé (15) situé sur le cylindre (20) est sur un élément de support (16) du cylindre.

4. Dispositif d'amortisseur de direction selon les revendications précédentes, dans lequel ladite tige de raccordement (12) peut être montée de manière articulée (11) sur la tête de direction (4) au niveau d'une saillie médiane (7) de la tête de direction (4).

5. Dispositif d'amortisseur de direction selon l'une quelconque des revendications précédentes, dans lequel les montages articulés (11, 15) comprennent des joints à rotule (14, 14A).

6. Dispositif d'amortisseur de direction selon la revendication 1, **caractérisé en ce qu'**il peut être monté entre l'ensemble de direction et le conducteur de la motocyclette.

7. Dispositif d'amortisseur de direction selon la revendication 1, **caractérisé en ce qu'**il peut être monté à l'avant de l'ensemble de direction.

8. Dispositif d'amortisseur de direction destiné à une motocyclette, cette dernière comprenant un cadre (1) supportant au niveau de son extrémité avant (2) un ensemble de direction comprenant une tête de direction (4) et une base de direction (5), sur lequel sont montés des éléments d'amortisseur (6) de type connu qui coopèrent avec une roue avant du véhicule, ce dernier ayant un plan de symétrie (P) longitudinal , le dispositif d'amortisseur de direction (17) comprenant un amortisseur de direction doté d'un cylindre (20) par rapport auquel un piston (21) se déplace selon l'angle de direction imposé par le conducteur sur l'ensemble de direction, ledit dispositif d'amortisseur de direction (17) ayant un axe longitudinal (W) qui est, à l'usage, constamment orthogonal par rapport au plan de symétrie (P) longitudinal de la motocyclette et transversal par rapport à ce dernier et à un mécanisme d'actionnement, l'amortisseur de direction pouvant être actionné par l'ensemble de direction par l'intermédiaire d'un mécanisme d'actionnement, **caractérisé en ce que** le mécanisme d'actionnement d'amortisseur comprend une tringlerie (26, 27, 28) pouvant être supportée par le cadre (1) de la motocyclette, et adaptée pour raccorder l'ensemble de direction avec le piston (21) d'amortisseur pour déplacer ce dernier dans le cylindre d'amortisseur qui peut être rigidement raccordé avec le cadre (1) de la motocyclette.

9. Dispositif d'amortisseur de direction selon la revendication 8, **caractérisé en ce que** le piston (21) comprend des extrémités (21A, 21B) faisant saillie à partir des extrémités opposées du cylindre (20), sur au moins une desquelles extrémités (21A) est située ladite tringlerie (26, 27, 28), ladite tringlerie comprenant une première tige de raccordement (27) qui à son tour est montée de manière articulée (au numéro de référence 41) sur un bras (42) d'un balancier (28), l'autre bras de ce dernier étant monté de manière articulée (au numéro de référence 44) sur une seconde tige de raccordement (26) pouvant être montée de manière articulée sur l'ensemble de direction.

10. Amortisseur de direction selon la revendication 8, **caractérisé en ce qu'**il peut être monté entre l'ensemble de direction et le conducteur de la motocyclette.

11. Amortisseur de direction selon la revendication 8, **caractérisé en ce qu'**il peut être monté à l'avant de l'ensemble de direction.
